# EUROPÄISCHE PATENTSCHRIFT

(11) **EP 3 848 108 B1**
(45) Veröffentlichungstag und Bekanntmachung des Hinweises auf die Patenterteilung: **04.03.2026**
(21) Anmeldenummer: 20150847.0
(22) Anmeldetag: 09.01.2020
(51) Int. Cl.: B01D 39/16

(54) **FILTERMEDIUM MIT ANTIALLERGENEN SUBSTANZEN**
FILTER MEDIUM WITH ANTIALLERGIC SUBSTANCES
MILIEU FILTRANT POURVU DE SUBSTANCES ANTIALLERGÉNIQUES

(43) Veröffentlichungstag der Anmeldung: 14.07.2021
(73) Patentinhaber: Carl Freudenberg KG, 69469 Weinheim (DE)
(72) Erfinder: Haefner, Uwe, 77694 Kehl (DE); Blauth, Sascha, 67688 Rodenbach (DE); Uenen, Ilker, 67574 Osthofen (DE)

(56) Entgegenhaltungen:
- EP-A1- 0 818 230
- WO-A1-2014/019660
- DE-A1- 102013 021 071
- DE-B3- 102005 037 671
- US-A- 5 888 527
- US-A1- 2019 329 171

## Beschreibung

Die Erfindung betrifft ein Filtermedium gemäß dem Oberbegriff von Anspruch 1. Die Erfindung betrifft auch ein Filterelement mit einem solchen Filtermedium gemäß Anspruch 7.

### Stand der Technik

Aus der DE 10 2013 021 071 A1 ist bereits ein mehrlagiges Filtermedium bekannt, welches eine antiallergene Filterschicht, eine antimikrobielle Filterschicht, eine Partikelfilterschicht und eine Geruchsfilterschicht aufweist. Häufig ist die antiallergene Filterschicht außenliegend am Filtermedium angeordnet, damit eine gute Freisetzung der antiallergenen Substanzen erfolgen kann. Nachteilig dabei ist, dass eine Langzeitwirkung der antiallergenen Filterschicht nur schwer sichergestellt werden. US 2019/329171 A1 offenbart ein Filtermedium, dass bei der Faltung eine geringe Abstoßung aufweist, eine ausgezeichnete Luft- und Wasserpermeationsbeständigkeit sowie Filterleistung besitzt und auch bei einer hohen Adsorptionsmittelbeladung des zu faltenden Filtermediums einen geringen Druckverlust aufweist.

Gemäß dem Stand der Technik wird die antiallergene Schicht erzeugt, indem antiallergene Substanzen durch Imprägnieren, Beschichten, Foulardieren, Pflatschen oder Tauchen von Filterlagen. Nachteilig dabei ist die aufwändige Verfahrenstechnik.

Ein anderes Filtermedium ist in der EP 3 162 425 A1 beschrieben. Mehrlagige Filtermedien mit flüssig aufgebrachten Antiallergenen gehen aus der DE 10 2013 021 071 A1 und der WO 2014/019660 A1 hervor. Mehrlagige Filtermedien mit eine Funktionsschicht aus Aktivkohlegranulat gehen jeweils aus der DE 10 2005 037 671 B3 und der EP 0 818 230 A1 hervor.

### Aufgabenstellung

Aufgabe der vorliegenden Erfindung ist es ein Filtermedium zu schaffen, welches verbesserte antiallergenen Eigenschaften aufweist und dabei einfacher in Herstellung und Handling ist.

### Technische Lösung

Gelöst wird diese Aufgabe durch ein Filtermedium mit den Merkmalen von Anspruch 1.

Erfindungsgemäß wurde als vorteilhaft erkannt die antiallergenen Substanzen in Form eines schüttfähigen oder rieselfähigen Feststoffes vorzusehen:
Das erfindungsgemäße Filtermedium besitzt eine funktionale Lage und zwei Vliesstofflagen, wobei die funktionale Lage zwischen den beiden Vliesstofflagen angeordnet ist. Unter einem Vliesstoff wird hierbei insbesondere ein Vliesstoff gemäß der Definition von DIN EN ISO 2019-08 verstanden.

Die funktionale Lage des Filtermediums enthält antiallergene Substanzen. Antiallergene Substanzen dienen dazu, beispielsweise feinste Pollenpartikel und andere Allergene, die von den Vliesstofflagen des Filtermediums nicht vollständig zurückgehalten werden können, so zu verändern, dass sie für das menschliche Immunsystem unschädlich sind. Gemäß der Erfindung sind die antiallergenen Substanzen in Form eines schüttfähigen oder rieselfähigen Feststoffes in der funktionalen Lage eingebracht. Der schüttfähige oder rieselfähige Feststoff kann bei der Herstellung des Filtermediums trocken eingestreut sein. Ein derartiges Filtermedium hat damit den Vorteil einer einfachen Produktion, da der schüttfähige oder rieselfähige Feststoff einfach zu handhaben ist. Des Weiteren wird durch den Aufbau des Filtermediums die funktionale Lage durch die beiden außen angeordneten Vliesstofflagen geschützt: Es besteht also ein guter Schutz der funktionalen Lage gegen mechanische Beanspruchung. Ein weiterer Vorteil des erfindungsgemäßen Filtermediums besteht in einem hohen Maß an Umweltverträglichkeit und Humanverträglichkeit, da Inhaltsstoffe der funktionalen Lage über den Produktlebenszyklus inklusive der Entsorgung des Filtermediums nicht austreten können. Ein weiterer Vorteil ergibt sich dadurch, dass die antiallergenen Substanzen aufgrund ihrer mittigen Positionierung in der funktionalen Lage langsam und gleichmäßig freigesetzt werden können.

In dem erfindungsgemäßen Filtermedium ist der Feststoff ein Granulat, auch als granulare Materie oder granulares Medium bezeichnet. Unter einem Granulat wird eine Pulver-, Kugel-, Partikel-, Staub- bzw. Kornform verstanden, insbesondere mit einem Granulatdurchmesser von 200 - 700 µm - auch als Korngröße bezeichnet. Bei gröberen Granulaten wäre eine gleichmäßige Verteilung der antiallergenen Substanzen über die Fläche des Filtermedium nicht mehr gewährleistet. Die Antiallergenen Substanzen liegen insbesondere in einer Konzentration von 2-250 g/m² vor, besonders bevorzugt in einer Konzentration von 20-25 g/m² bei der Verwendung von Zitronensäure. Dies gewährleistet eine gute antiallergene Wirkung des Filtermediums.

Gemäß einer ersten Variante können die antiallergenen Substanzen des Filtermediums Polyphenole enthalten, wie Catechine, Flavonoide, Tannine wie z.B. Tanninsäure. In einer anderen Ausführungsvariante können die antiallergenen Substanzen des Filtermediums Fruchtsäuren, wie z.B. Zitronensäure enthalten.

Die funktionale Lage enthält adsorptive Substanzen in Form eines schüttfähigen oder rieselfähigen Feststoffes, insbesondere Aktivkohle. Überraschenderweise wurde festgestellt, dass die Adsorptionsleistung von Aktivkohle beim Einsatz von Aktivkohle vermischt mit Zitronensäuregranulat in einer funktionalen Lage nicht schlechter ist als bei Verwendung der Aktivkohle in reiner Form. Durch das Vorsehen adsorptiver Substanzen können durch das Filtermedium zusätzlich noch störende bzw. giftige Gase adsorbiert werden.

Auch kann die funktionale Lage Substanzen zur Beduftung des Luftstroms enthalten, welcher das Filtermedium passiert. Solche Substanzen können z.B. Citronellal, Citronellol, Ethylvanillin und Limonen sein.

Liegen diese Substanzen bei den klimatischen Betriebsbedingungen des Filtermediums normalerweise in flüssiger Form vor, so können diese z.B. durch Feststoffe auf Basis von z.B. Kieselgel, Zeolithen und Superabsorbern aufgenommen werden, sodass der Riechstoff als ein schüttfähiger oder rieselfähiger Feststoff vorliegt.

Die funktionale Lage kann auch antikmikrobielle Substanzen enthalten, wie z.B. Metalle oder Metallverbindungen, welche verhindern, dass das Filtermedium von Mikroorganismen befallen wird, wie z.B. von Pilzen, Schimmel, Bakterien oder Algen.

Für den Aufbau der funktionalen Lage sind zwei Alternativen denkbar.

Gemäß einer ersten Alternative weist die funktionale Lage eine Schicht aus einer Mischung von Antiallergenen und adsorptiven Substanzen auf. D.h., die schüttfähigen oder rieselfähigen Feststoffe mit antiallergenen und adsorptiven Substanzen liegen durchmischt vor und bilden zusammen eine Schicht aus, welche auch als Substratschicht bezeichent werden kann. Für den Fall, dass zusätzlich noch Substanzen zur Beduftung und/oder antimikrobielle Substanzen vorgesehen sind, so können diese ebenfalls in der Mischung beinhaltet sein. In einer zweiten Variante weist die funktionale Lage mindestens zwei Schichten auf, mit einer Schicht aus antiallergenen Substanzen und einer weiteren Schicht aus adsorbtiven Substanzen. Für den Fall, dass auch Substanzen zur Beduftung und/oder antimikrobielle Substanzen vorgesehen sind, so können diese in weiteren Schichten einen Teil der funktionalen Lage ausbilden.

In Weiterbildung des Filtermediums sind die Substanzen der funktionalen Lage mittels Klebstoffes untereinander und mit den Vliesstofflagen verbunden. Der Klebstoff kann z.B. in Form von Schmelzkleberkügelchen oder in Form von im Sprühauftrag eingebrachtem feinen Klebstofffäden vorliegen.

In einer besonders vorteilhaften und daher bevorzugten Weiterbildung des erfindungsgemäßen Filtermediums besitzt mindestens eine Vliesstofflage eine hydrophile Eigenschaft und/oder mindestens eine Vliesstofflage eine hydrophobe Eigenschaft. Darüber lässt sich beeinflussen, wieviel Feuchtigkeit wie schnell in die funktionale Lage eindringt und die antiallergenen Substanzen freisetzt. Durch eine entsprechende hydrophile bzw. hydrophobe Eigenschaft der Vliesstofflagen kann so eine langsame und gleichmäßige Freisetzung der antiallergenen Substanzen sichergestellt werden. Die hydrophilen bzw. hydrophoben Eigenschaften der Vliesstofflagen lassen sich u.a. durch die Art der Verfestigung, mittels Imprägnierungen und durch eine abgestimmte Materialwahl bewirken. So haben Vliesstoffe, insbesondere abhängig vom Wasseraufnahmevermögen des Grundstoffs, aus Polycarbonat (PC) hydrophile und aus Polypropylen (PP) hydrophobe Eigenschaften.

Die Erfindung betrifft auch ein Filterelement mit einem Filtermedium wie obenstehend beschrieben, welches zur Luftfiltration in einer Lüftungsanlage einer mobilen Einrichtung dient, insbesondere von einem Fahrzeug, einem Schiff oder einem Fluggerät.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar. Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein nicht erfindungsgemäßes Filtermedium mit einer funktionalen Lage mit antiallergenen Substanzen und zwei Vliesstofflagen
- Fig. 2: ein Filtermedium mit einer funktionalen Lage mit antiallergenen und adsorptiven Substanzen und zwei Vliesstofflagen
- Fig. 3: eine weitere Ausführungsform eines Filtermediums mit einer funktionalen Lage mit antiallergenen und adsorptiven Substanzen und zwei Vliesstofflagen
- Fig. 4: ein Filterelement mit einem plissierten Filtermedium

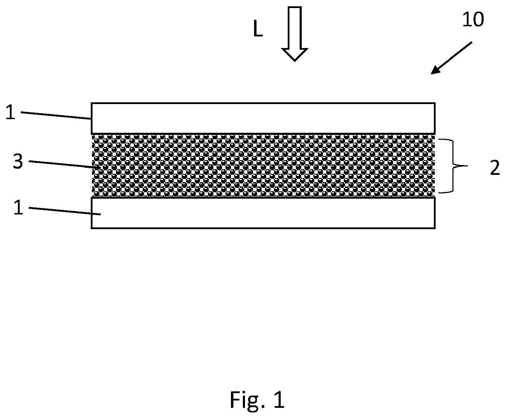

Fig. 1 zeigt eine erste, nicht erfindungsgemäße Ausführungsform eines Filtermediums 10, welches der Filtration eines Luftstroms L dient. Das Filtermedium 10 besitzt zwei Vliesstofflagen 1 und eine dazwischen angeordnete funktionale Lage 2. Die funktionale Lage 2 enthält eine antiallergene Substanz 3, welche in Form eines schüttfähigen bzw. rieselfähigen Feststoffes vorliegt, nämlich eines Granulats.

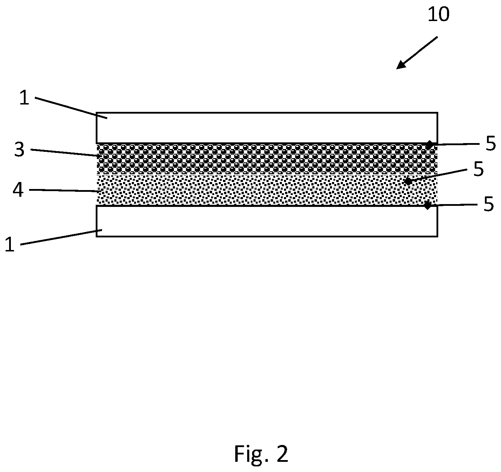

In der Ausführungsform des Filtermediums 10 gemäß Fig. 2 weist die funktionale Lage 2 zwei Schichten auf, nämlich eine erste Schicht mit antiallergenen Substanzen 3 und eine zweite Schicht mit adsorptiven Substanzen 4. Bei den adsorptiven Substanzen kann es sich beispielsweise um Aktivkohle handeln. Auch die adsorptiven Substanzen liegen in Form eines schüttfähigen oder rieselfähigen Feststoffes vor, insbesondere in Form eines Granulats. Die Substanzen an der funktionalen Lage 2 sind mittels Klebstoff 5 untereinander und mit den Vliesstofflagen 1 verbunden.

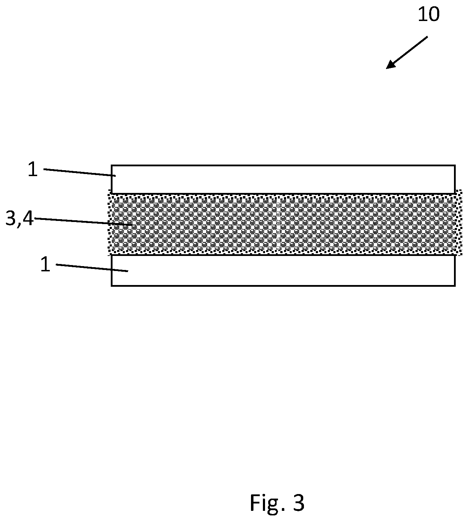

Wie in Fig. 3 dargestellt, kann die funktionale Lage 2 des Filtermediums 10 eine Schicht aufweisen aus einer Mischung von antiallergenen und adsorptiven Substanzen 3, 4. Die antiallergenen Substanzen 3 und die adsorptiven Substanzen 4 bilden gemeinsam eine Substratschicht aus, welche zwischen den Vliesstofflagen 1 angeordnet ist.

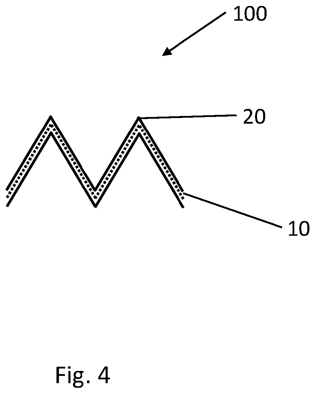

In Fig. 4 ist ein Ausschnitt aus einem Filterelement 100 gezeigt. Das Filtermedium 10 wurde plissiert und mit Faltkanten 20 versehen, sodass dieses eine größere Filtrationsfläche aufweist. Ein solches Filterelement 100 kann zusätzlich mit Kantenbändern oder Rahmen versehen sein (nicht dargestellt) und in Lüftungsanlagen von mobilen Einrichtungen verwendet werden, beispielsweise in Fahrzeugen, Schiffen oder Fluggeräten.

### Bezugszeichenliste

- 1: Vliesstofflage
- 2: Funktionale Lage
- 3: antiallergene Substanz als Granulat
- 4: Adsorptive Substanz als Granulat
- 5: Klebstoff

- 10: Filtermedium
- 20: Faltkante
- 100: Filterelement

- L: Luftstrom

## Patentansprüche

1. Filtermedium (10) mit einer funktionalen Lage (2) und zwei Vliesstofflagen (1),
wobei die funktionale Lage (2) zwischen den Vliesstofflagen (1) angeordnet ist und, wobei die funktionale Lage (2) antiallergene Substanzen enthält,
**dadurch gekennzeichnet, dass** die antiallergenen Substanzen in Form eines schüttfähigen oder rieselfähigen Feststoffes (3) vorliegen und der Feststoff ein Granulat (3) ist, die funktionale Lage (2) adsorptive Substanzen (4) in schüttfähiger oder rieselfähiger Form enthält, insbesondere Aktivkohle, wobei die funktionale Lage (2)
- eine Schicht aus einer Mischung von antiallergenen und adsorptiven Substanzen (3, 4) aufweist,
oder
- zwei Schichten aufweist, mit einer ersten Schicht aus antiallergenen Substanzen (3) und einer zweiten Schicht aus adsorptiven Substanzen (4).

2. Filtermedium nach einem der vorangehenden Ansprüche, **dadurch**
**gekennzeichnet, dass**
die antiallergenen Substanzen (3) Polyphenole oder Fruchtsäuren enthalten.

3. Filterelement nach einem der vorangehenden Ansprüche, **dadurch**
**gekennzeichnet, dass**
die funktionale Lage (2) Substanzen zur Beduftung enthält.

4. Filtermedium nach einem der vorangehenden Ansprüche **dadurch**
**gekennzeichnet, dass**
die funktionale Lage (2) antimikrobielle Substanzen enthält.

5. Filtermedium nach einem der vorangehenden Ansprüche, **dadurch**
**gekennzeichnet, dass**
die Substanzen der funktionalen Lage (2) mittels Klebstoffes (5) untereinander und mit den Vliesstofflagen (1) verbunden sind.

6. Filtermedium nach einem der vorangehenden Ansprüche, **dadurch**
**gekennzeichnet, dass**
mindestens eine Vliesstofflage (1) eine hydrophile Eigenschaft und/oder mindestens eine Vliesstofflage (1) eine hydrophobe Eigenschaft besitzt.

7. Filterelement (100) mit einem Filtermedium (10) nach einem der vorangehenden Ansprüche zur Luftfiltration in einer Lüftungsanlage einer mobilen Einrichtung, insbesondere eines Fahrzeugs, Schiffs oder Fluggeräts.

## Claims

1. Filter medium (10) having a functional ply (2) and two nonwoven fabric plies (1), the functional ply (2) being arranged between the nonwoven fabric plies (1) and the functional ply (2) containing antiallergenic substances,
**characterized in that** the antiallergenic substances are in the form of a pourable or free-flowing solid (3) and the solid is a granular material (3), and the functional ply (2) contains adsorptive substances (4) in pourable or free-flowing form, in particular activated carbon, the functional ply (2)
- having a layer of a mixture of antiallergenic and adsorptive substances (3, 4),
or
- having two layers, with a first layer of antiallergenic substances (3) and a second layer of adsorptive substances (4).

2. Filter medium according to one of the preceding claims, **characterized in that**
the antiallergenic substances (3) contain polyphenols or fruit acids.

3. Filter element according to one of the preceding claims, **characterized in that**
the functional ply (2) contains substances for scenting.

4. Filter medium according to one of the preceding claims, **characterized in that**
the functional ply (2) contains antimicrobial substances.

5. Filter medium according to one of the preceding claims, **characterized in that**
the substances of the functional ply (2) are bonded to each other and to the nonwoven fabric plies (1) by means of an adhesive (5).

6. Filter medium according to one of the preceding claims, **characterized in that**
at least one nonwoven fabric ply (1) has a hydrophilic property and/or
at least one nonwoven fabric ply (1) has a hydrophobic property.

7. Filter element (100) having a filter medium (10) according to one of the preceding claims for air filtration in a ventilation system of a mobile machine, in particular a vehicle, ship or aircraft.

## Revendications

1. Milieu filtrant (10) comprenant une couche fonctionnelle (2) et deux couches de non-tissé (1), la couche fonctionnelle (2) étant agencée entre les couches de non-tissé (1) et la couche fonctionnelle (2) contenant des substances antiallergiques,
**caractérisé en ce que** les substances antiallergiques se présentent sous la forme d'un solide (3) apte à être versé ou s'écoulant librement et le solide est un granulat (3), la couche fonctionnelle (2) contient des substances adsorbantes (4) sous forme apte à être versée ou s'écoulant librement, notamment du charbon actif, la couche fonctionnelle (2)
- présentant une couche en un mélange de substances antiallergiques et adsorbantes (3, 4),
ou
- présentant deux couches, avec une première couche composée de substances antiallergiques (3) et une deuxième couche composée de substances adsorbantes (4).

2. Milieu filtrant selon l'une quelconque des revendications précédentes, **caractérisé en ce que**
les substances antiallergiques (3) contiennent des polyphénols ou des acides de fruits.

3. Élément filtrant selon l'une quelconque des revendications précédentes, **caractérisé en ce que**
la zone fonctionnelle (2) contient des substances pour le parfumage.

4. Milieu filtrant selon l'une quelconque des revendications précédentes, **caractérisé en ce que**
la zone fonctionnelle (2) contient des substances antimicrobiennes.

5. Milieu filtrant selon l'une quelconque des revendications précédentes, **caractérisé en ce que**
les substances de la couche fonctionnelle (2) sont reliées entre elles et aux couches de non-tissé (1) au moyen d'un adhésif (5).

6. Milieu filtrant selon l'une quelconque des revendications précédentes, **caractérisé en ce que**
au moins une couche de non-tissé (1) possède une propriété hydrophile et/ou
au moins une couche de non-tissé (1) possède une propriété hydrophobe.

7. Élément filtrant (100) avec un milieu filtrant (10) selon l'une quelconque des revendications précédentes pour la filtration de l'air dans un système de ventilation d'un dispositif mobile, notamment d'un véhicule, d'un navire ou d'un aéronef.
